Europäisches Patentamt

European Patent Office

Office européen des brevets

(19)

(11) Publication number: **0 242 345**
B1

# EUROPEAN PATENT SPECIFICATION

(12)

(45) Date of publication of the patent specification:
31.01.90

(51) Int. Cl.⁴: **F16C 13/02**

(21) Application number: 87850111.3

(22) Date of filing: 07.04.87

(54) Glide-shoe arrangement for a variable-crown roll.

(30) Priority: 16.04.86 FI 861612

(43) Date of publication of application:
21.10.87 Bulletin 87/43

(45) Publication of the grant of the patent:
31.01.90 Bulletin 90/5

(84) Designated Contracting States:
AT DE FR GB SE

(56) References cited:
AU-B- 449 519
DE-A- 2 229 421
DE-A- 2 407 510
DE-A- 3 011 669
DE-B- 2 708 539
FR-A- 2 298 643
GB-A- 2 029 932
US-A- 3 782 793

(73) Proprietor: Valmet Oy, Punanotkonkatu 2,
SF-00130 Helsinki 13(FI)

(72) Inventor: Niskanen, Juhani, Yliopistonkatu 17 B 25,
F-40100 Jyväskylä(FI)

(74) Representative: Rostovanyi, Peter et al, AWAPATENT
AB Box 5117, S-200 71 Malmö(SE)

ACTORUM AG

## Description

The present invention concerns a glide-shoe arrangement for a variable-crown roll, comprising a non-revolving massive central axle, on which a cylindrical roll mantle is revolvingly journalled, between which axle and the inside face of said roll mantle piston-glide-shoe combinations loaded by means of hydraulic pressure fluid are fitted, whose glide shoes can be loaded by the intermediary of pistons by means of the pressures of the hydraulic fluid against the inside face of the roll mantle for the purpose of controlling the distribution of the nip pressure in a nip placed facing said loading shoes, said piston-glide-shoe combinations including cylindrical or equivalent bores formed in said axle, into which bores cylindrical or equivalent pistons are fitted, and between which loading pistons and their glide shoes bearings are fitted which are provided with spherical bearing faces, the center of rotation of said bearings being arranged at the glide shoe side of the piston-glide-shoe combinations.

In prior art, several different variable-crown or adjustable-crown rolls for paper machines are known. As a rule, these rolls comprise a massive, stationary roll axle and a roll mantle arranged as revolving around the said axle. Between the said axle and the mantle, a series of glide shoes and/or chambers of pressure fluid, acting upon the inner face of the mantle, are fitted. As a rule, the nips formed by such rolls, such as press nips or calendering nips, are loaded by means of loading forces applied to the axle journals of the variable-crown roll and of its counter-roll.

The present invention relates to such variable-crown or adjustable-crown rolls as include a series of glide shoes whose glide faces act upon the inner face of the roll mantle and whose glide faces are at least partly hydrostatically lubricated by means of pressure fluid passed onto the glide face.

In respect of the prior art related to the invention, reference is made, by way of example, to the US Patent No. 4 241 482 to the Finnish Patents Nos. 56,252 and 69,684 as well as to the Finnish Patent Application No. 792,712.

A great number of different functions are required from the supporting and loading members used in variable-crown rolls and acting upon the inner face of the roll mantle and loaded by means of pressure fluid, and an integration of all of these functions in one and the same member has not been quite successful by means of the arrangements known in prior art. In the following, a list is given of some of the properties required from the said supporting and loading members:
- the hydrostatic lubrication of the support shoes as well as the loading-shoe/cylinder must be sufficiently well sealed even with varying load forces, and even when changes in angle take place between the mantle and the inner part,
- the loading pistons of the support shoes must receive lateral forces, which are forces caused by friction,
- the loading equipment for the support shoes must be capable of acting as an articulated joint, because the relative positions of the mantle to be supported and the central axle in respect of each other vary to a considerable extent with varying load forces,
- the pistons of the support shoes must provide a sufficient radial force, whose range of variation must be sufficiently large in view of supporting and loading the mantle,
- it must be possible to control the thickness of the oil film that lubricates the glide face of the support shoes, and
- the loading pistons of the support shoes and the bores provided in connection with the central axle must permit even considerable radial movements of the pistons.

In the loading and supporting members known in prior art, the functions listed above are not carried into effect satisfactorily, at least not all of them. It is an object of the present invention to avoid the above drawbacks and to provide a novel arrangement of fastening for the glide and support shoes so that the properties mentioned above can be accomplished.

It is an object of the invention to provide such an arrangement of support for the glide shoes in which the glide shoes can be made to be positioned freely in all directions in relation to the pistons that load them.

It is a particular object of the invention to provide such an arrangement of support for the glide shoes in which the pivot point of the glide shoes in relation to the loading pistons can be placed as near the lubricated glide face of the glide shoes as possible so that the moment of the friction forces that tends to turn the glide shoes, which said friction forces are produced by the friction of the glide face, should be as little as possible.

It is an essential object of the present invention to provide such a relative support arrangement between the glide shoes and their support pistons wherein pressurized fluid can be passed from the loading space of the loading pistons into the lubrication spaces of the glide shoes through a simple and tight support-joint construction.

In view of achieving the objectives stated above and those that will come out later, the invention is mainly characterized in that a pin-shaped projection part is fitted in said loading pistons, which projection part extends through said bearing, and which pin-shaped projection part is mainly a cylindrical body whose centre axis substantially coincides with the centre axis of the cylindrical bores for the pistons; that between said pin-shaped projection part and the glide shoe or a projection part attached to the glide shoe, there is a sealed articulation arrangement which is placed substantially in the same plane in which the center of rotation of said bearing that has spherical bearing faces is placed; and that the pressure fluid can be passed from the loading space of the pistons through said pin-shaped projection part into hydrostatic lubrication spaces on the glide shoes.

Further features of the invention are stated in the accompanying claims.

In accordance with the invention, the centres of rotation of the glide shoes become placed near the inner face of the roll mantle, i.e. near the glide face of the glide shoes, whereby the friction between the roll mantle and the glide shoes causes a minimum of a moment inclining the shoes.

In accordance with the invention, when the seal ring between the pin of the loading piston and the glide shoe or a component attached to the glide shoe is placed in the plane of the centre of rotation of the glide shoes, the seal moves in operation as little as possible, and thereby it can be sealed reliably and its construction can be made simple.

It is a further advantage of the invention that between the glide shoes and the loading pistons, it is possible to use standard bearings, whose friction is low and whose cost is favourable.

In the support arrangement of the invention, it is possible to use bearings of relatively little radius of rotation, whereby the moment tending to prevent inclination of the shoe becomes as little as possible.

Regarding the prior art, mention should also be made of GB-A 2 029 932 on which the preamble of claim 1 is based.

In this document, there is shown a roller comprising an articulated joint floating by the aid of an intermediate chamber. In contrast thereto, a simpler, non-floating articulated joint can be used according to the invention owing to the pin-shaped projection part fitted in the loading pistons. In addition it is possible, according to the invention, to use a spherical bearing having a very small radius.

The corresponding radius in the arrangement shown in the GB document is larger by at least one order of magnitude. Moreover, the sealing in the area of the pressure reduction chamber shown in whould cause great difficulties.

US-A 3 782 793 shows a bearing construction with an articulated joint floating by the aid of an intermediate chamber. In this document, the joint point of the piston is not in the center of rotation of the bearing surface, and consequently the structure does not enable the piston to incline to a sufficiently great degree. The structure of the invention, however, enables the piston to incline to a sufficient degree with respect to the deflection of the axle.

Other known arrangements which complete the technological background of the invention are described in AU-A 449 519 and DE-A 2 229 421.

In the following, the invention will be described in detail with reference to an exemplifying embodiment of the invention, illustrated in the figures of the accompanying drawing, the invention being not restricted to the details of the said embodiment.

Figure 1 is a schematical view of a variable-crown roll in accordance with the invention when it forms a nip with a counter-roll.

Figure 2 shows a section II–II in Fig. 1.

Figure 3 is a partial sectional view along line II–II in Fig. 1, on a larger scale than Fig. 2.

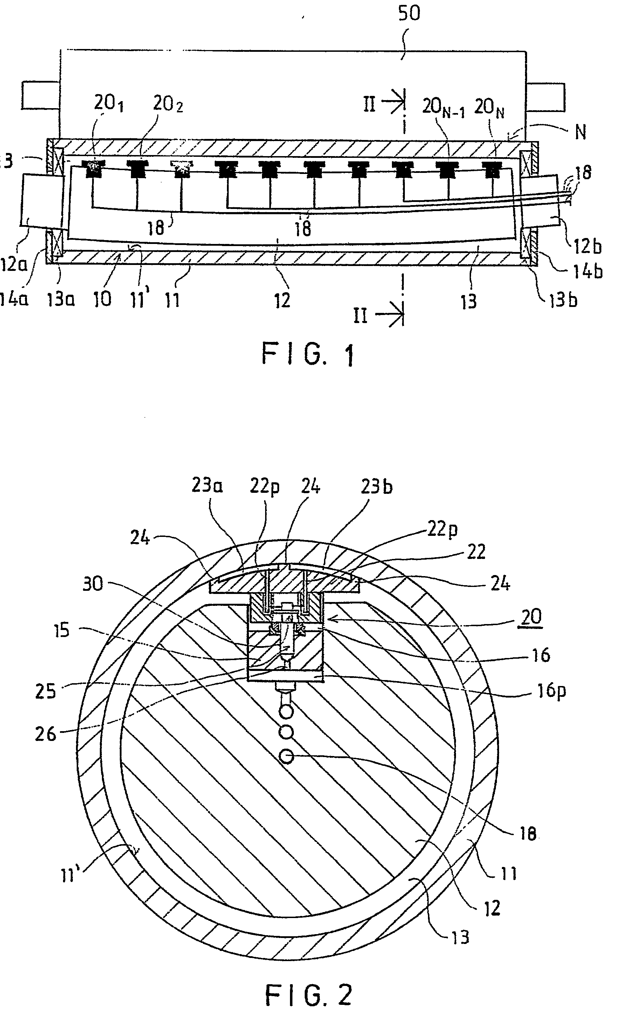

To begin with, the general construction of the variable-crown roll adjustable in zones illustrated in Figures 1, 2 and 3 will be described, which said construction is largely known in prior art. The roll 10, e.g. a press roll or calender roll for a paper machine, comprises a revolving cylinder mantle 11, within which there is a stationary massive axle 12.

Between the inner face 11' of the mantle 11 and the axle 12 a sufficiently large free space 13 remains. The mantle 11 is journalled on axle journals 12a and 12b, which constitute extensions of the axle 12, by means of bearings 13a and 13b. The mantle 11 is closed by end flanges 14a and 14b. The roll mantle 11 is driven by the intermediate of a drive mechanism not shown.

Opposite the roll 10, another roll 50 is provided, which said rolls 10 and 50 together form, e.g., a press nip N. Between the axle 12 and the inner face 11' of the mantle 11, a piston-loading-shoe combination $20_1...20_N$ in accordance with the invention is provided, by whose means the linear load in the nip N can be adjusted in zones and compensated to the desired level, e.g. so as to make a uniformly distributed linear load.

In the following, the principal construction of the piston-shoe arrangement in accordance with the invention, placed between the axle 12 and the roll mantle 11, will be described.

Into each of the said cylinders 16, a separately adjustable pressure of appropriate magnitude is passed from an external pressure source (not shown) through fluid ducts. In each cylinder, there is a piston 15 of, e.g., circular section. To each piston 15, a loading shoe 22 of its own is connected. The loading shoes 22 are identical with each other, and they are spaced axially as densely as possible so that a uniform load is provided on the cylinder mantle 11 even with high compensation forces. The shoes 22 include, e.g., two hydrostatic lubrication chambers 23a and 23b, between which and at whose edges there are ridges 24, which form a lubricated glide face against the smooth inner face 11' of the mantle 11. Into the hydrostatic lubrication chambers 23a and 23b, lubrication oil has been passed out of the pressure space 16p in the piston 15 through the bore 26 in the piston 15 as well as through a support joint arrangement 30 in accordance with the present invention, which will be described in more detail below.

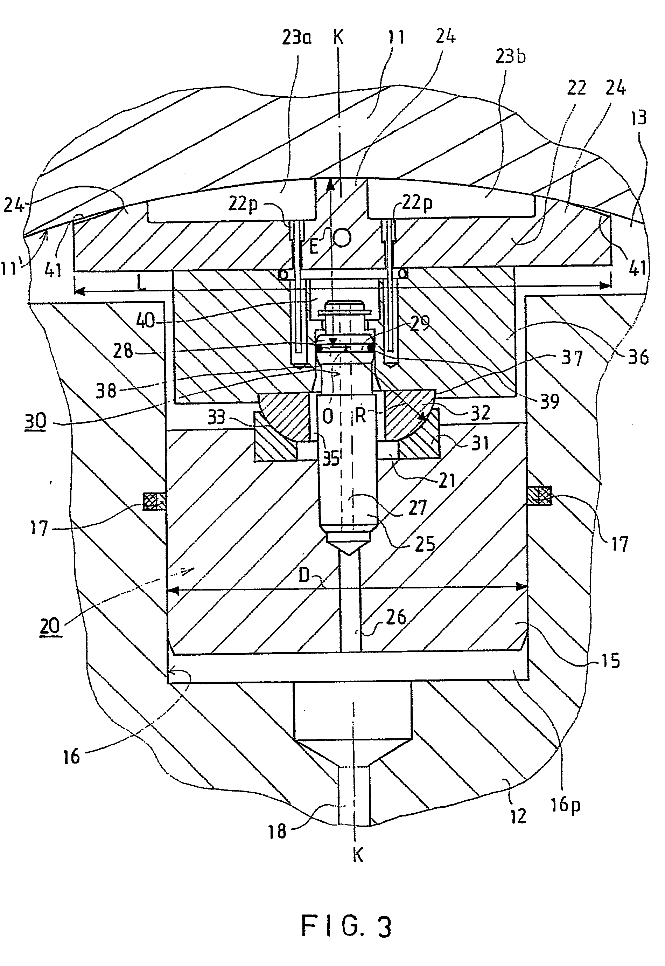

In the following, a preferred exemplifying embodiment will be described in detail, reference being made mainly to Fig. 3.

At the same time, the support joint arrangement 30 in accordance with the invention, placed between the glide shoes 22 and the loading pistons 15, operates as a pressure-tight fitting, by means of which the pressurized fluid is passed from the pressure spaces 16p in the cylinders 16 of the loading pistons 15 into the lubrication chambers 23a and 23b on the glide shoes 22. To the plane face of the glide shoes 22 placed opposite to the glide face, a projection piece 36 is attached, which is placed with a sufficiently wide play inside the cylinder bores 16. To a shallow bore 37 in the lower side of the projection pieces 36, a bearing piece 32 is fixed. A second bearing piece 31 is fixed to a bore 21 in the end face of the piston 15. The bearing pieces 31 and 32 have spherical bearing faces 33 facing each other, whose journalling centre is, in Fig. 3, denoted with 0, and the journalling radius with R.

The pistons 15 have a central bore 26, to whose wider part a pin 25 is fixed, which extends centrally through the bearing 31,32,33 into a central bore 38 in the projection piece 36 of the glide shoe 22. In the part of the said pin 25 that is placed inside the projection piece 36, there are two ring flanges 28, an elastic seal ring 39, e.g. of rubber, being fitted in a groove 29 between the said flanges. A bore 27 passes through the pin 25, one end of the said bore being connected with the bore 26 in the piston 15, and the other end with the space 40 in the projection piece 36 of the glide shoe 22. The bores 22p in the glide shoe 22 open into the said space 40.

From the pressure space 16p of the cylinder bores 16 loading the piston 15, the pressure fluid is passed along the route 26-27-40-22p into the spaces 23a and 23b on the glide shoes 22 so as to lubricate the glide face between the glide shoes 22 and the inner face 11' of the roll mantle 11 hydrostatically. The route of the said pressure fluid is sealed at the joint of the combination 30 by the ring seal 39 of the pin 25 against the inner face of the bore 38 in the projection part 36.

According to the invention, the centre of rotation 0 of the spherical bearing 31,32,33 of the pistons 15 and of the glide shoe 22 is placed at the level of the seal 39 of the piston 15 pin 25 so that, when the glide shoe 22 and its fixed projection part 36 pivot relative the piston 15, the seal 39 moves very little relative the walls of the bores 38 in the projection part 36, and hereby a simple and reliable seal construction is obtained. According to the invention, in the combinations $20_1...20_N$, the centres of rotation 0 of the pistons 15 and of the glide shoes 22 are placed as near the glide face between the glide shoe 22 and the mantle 11 as possible, out of the reasons mentioned above.

As is shown in Fig. 3, the bore 26 in the piston 15, the projection part 25, and the bore 27 in it are placed on the centre line K-K of the cylinder bores 16.

In their cylinder bores 16, the pistons 15 are sealed by seal rings 17. The joint arrangement 30 guarantees that, in spite of relative changes in position between the central axle 12 and the mantle 11, the glide contact of the glide shoe remains correct, and, moreover, the pistons 15 are not stuck in their bores 16.

The glide-shoe arrangement in accordance with the invention is intended for use in connection with such glide shoes in which a partly, preferably mainly, hydrostatic lubrication is used. In the glide shoes, it is also possible to use partly hydrodynamic lubrication, which is implied by the chamferings 41 at the edges of the glide faces on the glide shoes 22, which said chamferings, together with the inner face 11' of the mantle 11, define wedge spaces, in which a dam pressure of lubricant is produced, by means of which the glide face may, if necessary, also be lubricated partly hydrodynamically.

In Fig. 3, the glide-shoe arrangement is shown with the correct proportions and in the scale 1:1.5. In Fig. 3, the length of the glide shoe in the direction of rotation of the roll mantle 11 is denoted with L, the diameter of the loading piston 15 with D, the radius of the spherical bearing with R, and the perpendicular distance of the journalling centre 0 of the said spherical bearing from the glide face of the mantle 11 with E. Within the scope of the invention, the said dimensions are, as a rule, within the ranges of D = 50 to 200 mm; E = 20 to 80 mm; L = 100 to 300 mm; R = 20 to 50 mm. When the dimensions R and E essential for the invention are proportioned to the width L of the glide shoe 22, it can be ascertained that favourably L/R > about 3, preferably L/R = about 4...6, and L/E > about 2, preferably L/E = about 2.5...4. If the said dimensions R and E are proportioned to the diameter D of the loading piston 15, it can be ascertained that D is favourably several times larger than the dimensions R and E.

The construction described above operates mainly as follows. The axle 12 is pressed by the intermediate of articulated bearings (not shown) attached to its axle journals 12a and 12b against the counter-roll 50 so as to load the nip N, whereby the axle 12 is, at the same time, deflected. In order to control the distribution (profile) of the nip pressure N in zones, a fluid pressure of adjustable magnitude is applied through the ducts 18 so as to load the glide-shoe-piston combinations $20_1...20_N$, which said pressure presses the pistons 15 and the shoes 22 attached to the pistons within the area of the nip N against the inner face 11' of the roll mantle 11. The shoes 22 receive their lubrication oil from the loading oil and pressure of the pistons 15, so that the pressure of the lubrication oil in the spaces 23a and 23b is proportional to the loading pressure of the pistons 15 and the shoes 22 attached to same. As the axle 12 is deflected because of the loading forces, the shoes 22 are able to be positioned in accordance with the mantle 11 and the pistons 15 in accordance with the central axle, because the pistons 20 and the shoes 22 are interconnected by the support joint arrangement 30. The shoes 22 are also capable of being positioned in the cross-sectional plane of the roll 10 around the spherical joints 31,32,33, and this positioning is not interfered with by the sealed passage of the lubrication oil into the chambers 23a and 23b on the shoes 22.

In the following, the patent claims will be given, whereat the various details of the invention may show variation within the scope of the inventive idea defined in the said claims and differ from the details given above by way of example only.

## Claims

1. Glide shoe arrangement for a variable-crown roll (10), comprising a non-revolving massive central axle, on which a cylindrical roll mantle (11) is revolvingly journalled (13a, 13b), between which said axle (12) and the inside face (11") of said roll mantle (11) piston-glide-shoe combinations $(20_1...20_N)$ loaded by means of hydraulic pressure fluid are fitted, whose glide shoes (22) can be loaded by the intermediary of pistons (15) by means of the pressures of the hydraulic fluid against the inside face (11") of the roll mantle (11) for the purpose of controlling the distribution of the nip pressure in a nip (N) placed facing said loading shoes (22), said piston-glide-shoe combinations (20₁...20ₙ) including cylindrical or equivalent bores (16) formed in said axle (12), in which bores (16) cylindrical or equivalent pistons (15) are fitted, and between which loading pistons (15) and their glide shoes (22) bearings (31, 32) are fitted which are provided with spherical bearing faces (33), the center of rotation (0) of said bearings (31, 32) being arranged at the glide shoe side of the piston-glide-shoe combinations (22), characterised in that a pin-shaped projection part (25) is fitted in said loading pistons (15), which projection part (25) extends through said bearing (31, 32, 33), and which pin-shaped projection part (25) is mainly a cylindrical body whose centre axis substantially coincides with the centre axis (K–K) of the cylindrical bores (16) for the pistons (15); that between said pin-shaped projection part (25) and the glide shoe (22) or a projection part (36) attached to the glide shoe (22), there is a sealed articulation arrangement (30) which is placed substantially in the same plane in which the center of rotation (0) of said bearing (31, 32) that has spherical bearing faces is placed; and that the pressure fluid can be passed from a loading space (16p) of the pistons (15) through said pin-shaped projection part (25) into hydrostatic lubrication spaces (23a, 23b) on the glide shoes.

2. Variable-crown roll as claimed in claim 1, characterised in that part of the pin-shaped projection part (25) which is placed within the glide shoe (22), there are two ring flanges (28) between which there is a groove (29) in which a seal ring (39) is fitted which seals the joint arrangement (30) between the loading pistons (15) and the glide shoes (22).

3. Variable-crown roll as claimed in claim 1 or 2, characterised in that the plane outer end of said loading pistons (15) is provided with a bore (21) or equivalent to which a bearing ring (31) of the spherical bearing is fixed that has a concave bearing face (33), and that a further bearing ring (32) which has a convex spherical bearing face (33), is fixed to the inner plane face of the glide shoes (22) or to the inner side of the projection part (36) of the glide shoes (22) or to a bore (37) in same, and that said pin-shaped projection part (25) extends through inner holes (35) in said bearing rings (31, 32).

4. Variable-crown roll as claimed in any of the claims 1 to 3, characterised in that the inside face of said glide shoes (22) is provided with a projection part (36) which fits with a wide play into the outer part of said cylindrical bores (16), and that said projection part (36) is provided with a central bore (38) into whose interior said pin-shaped projection part (25) extends and against the inner face of which central bore (38) the seal ring (39) on the pin-shaped projection part (25) seals said joint arrangement (30).

5. Variable-crown roll as claimed in claim 4, characterised in that the side of the central bore (38) in said projection part (36) facing the glide shoe (22) is formed with a space (40) into which a bore (27) in said pin-shaped projection part (25) opens, the opposite end of said bore (27) in said pin-shaped projection part (25) being connected to the loading pressure space (16p) in the piston (15) via a bore (26) in the piston (15), and that bores (22p) or the like extend from said space (40) into the hydrostatic lubrication spaces (23a, 23b) on the glide shoe (22).

6. Variable-crown roll as claimed in any of the claims 1 to 5, characterised in that the ratio of the length (L) of said glide shoe (22) in the direction of rotation of the roll mantle (11) to the journalling radius (R) of said spherical bearing and to the perpendicular distance (E) of its journalling center (0) from the glide face of the glide shoe (22) is L/R > about 3, preferably L/R = 4–6, L/E > about 2, preferably L/E = 2.5–4, and that the diameter (D) of said loading piston (15) is substantially larger, preferably several times larger than said journalling radius (R) and the said distance (E).

**Patentansprüche**

1. Gleitstützelementanordnung für eine Durchbiegungseinstellwalze (10), die folgendes aufweist: einen massiven feststehenden Zentralschaft, auf welchem ein zylindrischer Walzenmantel (11) drehbar gelagert ist (13a, 13b), wobei zwischen dem Schaft (12) und der Innenfläche (11″) des Walzenmantels (11) hydraulisch unter Druck gesetzte Kolben-Gleitstützelement-Kombinationen (20₁...20ₙ) angeordnet sind und die Gleitschuhe (22) durch dazwischenliegenden Kolben (15) über die Drücke aus der hydraulischen Flüssigkeit gegen die Innenfläche (11″) des Walzenmantels (11) drückbar sind, um die Verteilung des Spaltdruckes in einem Spalt (N), der den Anpreßschuhen (22) gegenüberliegt, zu regulieren, wobei zu den Kolben-Gleitschuh-Kombinationen (20₁...20ₙ) in dem Schaft (12) ausgebildete zylindrische oder äquivalente Bohrungen (16) gehören, und in den Bohrungen (16) zylindrische oder äquivalente Kolben (15) angeordnet sind, und zwischen den Anpreßkolben (15) und ihren Gleitschuhen (22) Lagerungen mit sphärischen Lagerflächen (33) vorgesehen sind, und der Schwenkmittelpunkt (0) der Lager (31, 32) auf der Gleitschuhseite der Kolben-Gleitschuh-Kombination (22) liegt, dadurch gekennzeichnet, daß in den Anpreßkolben (15) ein bolzenförmiges vorspringendes Teil (25) befestigt ist, wobei das vorspringende Teil (25) sich durch das Lager (31, 32, 33) hindurch erstreckt, und das bolzenförmige vorspringende Teil (25) hauptsächlich ein zylindrischer Körper ist, dessen Mittelachse sich im wesentlichen mit der Mittelachse (K–K) der zylindrischen Bohrung (16) für die Kolben (15) deckt; daß zwischen dem bolzenförmigen vorspringenden Teil (25) und dem Gleitschuh (22) oder einem vorspringenden, am Gleitschuh (22) angeordneten Teil (36) eine abgedichtete Gelenkanordnung (30) vorhanden ist, welche im wesentlichen in derselben Ebene plaziert ist, in welcher der Schwenkmittelpunkt (0) des Lagers mit sphärischen Lagerflächen (31, 32) liegt; und daß die Druckflüssigkeit aus einem Druckraum (16p) für die Kolben (15) durch das bolzenförmige vorspringende Teil hindurch in die hydrostatischen Schmierräume (23a, 23b) an den Gleitschuhen zu bringen ist.

2. Durchbiegungseinstellwalze nach Anspruch 1, dadurch gekennzeichnet, daß an dem Stück des bolzenförmigen vorspringenden Teils (25), welches innerhalb des Gleitschuhs (22) liegt, zwei Ringwulste (28) vorhanden sind, zwischen denen eine Rille (29) besteht, in welcher ein Dichtungsring (39) eingelegt ist, der die Verbindungsanordnung (30) zwischen den Anpreßkolben (15) und den Gleitschuhen (22) abdichtet.

3. Durchbiegungseinstellwalze nach Anspruch 1 oder 2, dadurch gekennzeichnet, daß das ebene äußere Ende des Anpreßkolbens (15) eine Bohrung (21) oder etwas äquivalentes aufweist, in welcher ein Lagerring (31) mit konkaver Lagerfläche (33) des sphärischen Lagers befestigt ist, und daß ein weiterer Lagering (32) mit konvexer sphärischer Lagerfläche (33) an der inneren ebenen Fläche des Gleitschuhs (22) oder an der inneren Seite des vorspringenden Teils (36) der Gleitschuhe (22) oder in einem in denselben befindlichen Rücksprung (37) befestigt ist, und daß das bolzenförmige vorspringende Teil (25) sich durch die inneren in den Lagerringen (31, 30) befindlichen Löcher (35) erstreckt.

4. Durchbiegungseinstellwalze nach den Ansprüchen 1–3, dadurch gekennzeichnet, daß die Innenfläche der Gleitschuhe (22) mit einem vorspringenden Teil (36) versehen ist, welches mit großem Spiel in den äußeren Teil der zylindrischen Bohrungen (16) hineinpaßt, und daß das vorspringende Teil (36) eine zentrale Bohrung (38) aufweist, in welcher das bolzenförmige vorspringende Teil (25) hineinragt und gegen deren Innenfläche (38) der Dichtring (39) auf dem bolzenförmigen vorspringenden Teil (25) die Verbindungsanordnung (30) abdichtet.

5. Durchbiegungseinstellwalze nach Anspruch 4, dadurch gekennzeichnet, daß die Seite der Zentralbohrung (38) in dem vorspringenden Teil (36), welche zum Gleitschuh (22) hin gerichtet ist, mit einem Raum (40) versehen ist, in welchen eine in dem bolzenförmigen vorspringenden Teil (25) vorgesehene Bohrung (27) mündet, während das entgegengesetzte Ende der Bohrung (27) in dem bolzenförmigen vorspringenden Teil (25) mit dem Anpreßdruckraum (16p) über eine Bohrung (26) im Kolben (15) verbunden ist, und daß Bohrungen (22p) oder etwas ähnliches sich von diesem Raum (40) aus in die hydrostatischen Schmierräume (23a, 23b) am Gleitschuh (22) erstrecken.

6. Durchbiegungseinstellwalze nach den Ansprüchen 1–5, dadurch gekennzeichnet, daß das Verhältnis der Länge (L) des Gleitschuhes (22) in Drehrichtung des Walzenmantels (11) zum Lagerungsradius (R) dieser sphärischen Lagerung und zum senkrechten Abstand (E) seines Schwenkmittelpunktes (0) von der Gleitfläche des Gleitschuhs (22) L/R > etwa 3, vorzugsweise L/R = 4–6 und L/E > etwa 2, vorzugsweise L/E = 2,5–4 ist, und daß der Durchmesser (D) des Anpreßkolbens (15) wesentlich größer, vorzugsweise mehrfach größer ist als der Schwenkradius (R) und der Abstand (E).

## Revendications

1. Patin de glissement pour cylindre à compensation de flèche (10), comprenant un arbre central plein non rotatif sur lequel une chemise de cylindre (11) est montée sur tourillon (13a, 13b) de façon rotative, des combinaisons de patins de glissement et de pistons ($20_1...20_N$) chargés au moyen d'un fluide hydraulique sous pression étant montées entre l'arbre (12) et la face interne (11") de la chemise de cylindre (11), patins de glissement (22) pouvant être chargés par l'intermédiaire de pistons (15) au moyen de la pression du fluide hydraulique contre la face interne (11") de la chemise de cylindre (11) afin de réguler la répartition de la pression de serrage dans une emprise (N) située en opposition aux patins de chargement (22), ces combinaisons de patins de glissement et de pistons ($20_1...20_N$) comprenant des alésages cylindriques ou équivalents (16) formés dans l'arbre (12), alésages (16) dans lesquels sont montés des pistons cylindriques ou équivalents (15), et entre lesquels pistons de chargement (15) et leurs patins de glissement (22) sont montés des paliers (31, 32) qui sont munis de faces de portée sphériques (33), le centre de rotation (0) de ces paliers (31, 32) étant disposé sur le côté du patin de glissement des combinaisons de patins de glissement et de pistons (22), caractérisé en ce qu'une partie en saillie en forme de cheville (25) est principalement constituée par un corps cylindrique dont l'axe géométrique coïncide sensiblement avec l'axe géométrique (K–K) des alésages cylindriques (16) pour les pistons (15); en ce qu'entre la partie en saillie en forme de cheville (25) et le patin de glissement (22) ou une partie en saillie (36) fixée sur le patin de glissement (22), il est prévu un agencement d'articulation étanche (30) qui est placé sensiblement dans le même plan que le centre de rotation (0) du palier (31, 32) qui comporte des faces de portée sphériques; et en ce que le fluide sous pression peut être amené à partir d'un espace de chargement (16p) des pistons (15) par la partie en saillie en forme de cheville (25) jusque dans des espaces de lubrification hydrostatique (23a, 23b) sur les patins de glissement.

2. Cylindre à compensation de flèche selon la revendication 1, caractérisé en ce que dans cette portion de la partie en saillie en forme de cheville (25) qui est placée à l'intérieur du patin de glissement (22) sont prévues deux collerettes (28) entre lesquelles se situe une rainure (29) dans laquelle est montée une bague d'étanchéité (39) qui assure l'étanchéité de l'agencement de joints (30) entre les pistons de chargement (15) et les patins de glissement (22).

3. Cylindre à compensation de flèche selon la revendication 1 ou 2, caractérisé en ce que l'extrémité extérieure plane des pistons de chargement (15) est munie d'un alésage (21) ou équivalent sur lequel est fixé un anneau de palier (31) du palier sphérique qui présente une face de portée concave (33) et en ce qu'un anneau de palier supplémentaire (32) qui présente une face de portée sphérique convexe (33) est fixé sur la face plane intérieure des patins de glissement (22) ou sur le côté intérieur de la partie en saillie (36) des patins de glissement (22) ou dans un alésage (37) de ceux-ci, et en ce que la partie en saillie en forme de cheville (25) s'étend à travers des trous intérieurs (35) dans les anneaux de palier (31, 32).

4. Cylindre à compensation de flèche selon l'une quelconque des revendications 1 à 3, caractérisé en ce que la face intérieure des patins de glissement (22) est munie d'une partie en saillie (36) qui s'adapte avec un jeu important dans la partie extérieure des alésages cylindriques (16) et en ce que la partie en saillie (36) est munie d'un alésage central (38) dans l'intérieur duquel s'étend la partie en saillie en forme de cheville (25) et contre la face intérieure de l'alésage central (38) la bague d'étanchéité (39) sur la partie en saillie en forme de cheville (25) assure l'étanchéité de l'agencement de joint (30).

5. Cylindre à compensation de flèche selon la revendication 4, caractérisé en ce que le côté de l'alésage central (38) dans la partie en saillie (36) en opposition au patin de glissement (22) est formé avec un espace (40) dans lequel s'ouvre un alésage (27) dans la partie en saillie en forme de cheville (25), l'extrémité opposée de l'alésage (27) dans la partie en saillie en forme de cheville (25) étant reliée à l'espace sous pression de chargement (16p) dans le piston (15) par l'intermédiaire d'un alésage (26) dans le piston (15) et en ce que des alésages (22p) ou similaires s'étendent à partir de l'espace (40) jusque dans les espaces de lubrification hydrostatique (23a, 23b) sur le patin de glissement (22).

6. Cylindre à compensation de flèche selon l'une quelconque des revendications 1 à 5, caractérisé en ce que le rapport entre la longueur (L) du patin de glissement (22) dans le sens de rotation de la chemise de cylindre (11) et le rayon (R) de pivotement sur tourillon du palier sphérique et entre la distance perpendiculaire (E) de son centre de pivotement sur tourillon (0) à partir de la face de glissement du patin de glissement (22) est L/R > environ 3, de préférence L/R = 4–6, L/E > environ 2, de préférence L/E = 2,5–4 et en ce que le diamètre (D) du piston de chargement (15) est sensiblement plus grand, de préférence plusieurs fois supérieur au rayon de pivotement sur tourillon (R) et à cette distance (E).

F I G. 1

F I G. 2

FIG. 3